(19) Europäisches Patentamt
European Patent Office
Office européen des brevets

(11) **EP 2 604 999 A1**

(12) **EUROPÄISCHE PATENTANMELDUNG**

(43) Veröffentlichungstag:
**19.06.2013   Patentblatt 2013/25**

(51) Int Cl.:
***G01N 21/39*** *(2006.01)*

(21) Anmeldenummer: **11193681.1**

(22) Anmeldetag: **15.12.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Mettler-Toledo AG**
**8606 Greifensee (CH)**

(72) Erfinder: **Killich, Frank**
**34596 Bad-Zwesten (DE)**

(54) **Gasmessgerät**

(57)   Gasmessgerät zur absorptions-spektroskopischen in-situ Bestimmung mindestens eines chemischen und/oder physikalischen Parameters eines gasförmigen Messmediums (432), wobei das Gasmessgerät ein erstes Gehäuse (101, 201, 301, 401, 501); mindestens einen Laser (102, 202, 302, 402) als Strahlungsquelle, welcher im ersten Gehäuse (101, 201, 301, 401, 501) angeordnet ist; mindestens ein ersten Prozessfenster (114, 214, 314, 414, 514) zur Einkopplung der vom Laser (102, 202, 302, 402) ausgesandten Strahlung in ein Messmedium (432); und mindestens einen Detektor (103, 203, 303, 403), mit welchem die Strahlung nach Wechselwirkung mit dem Messmedium (432) detektiert wird, umfasst; dadurch gekennzeichnet, dass das erste Prozessfenster (114, 214, 314, 414, 514) als Meniskuslinse ausgestaltet ist, welche eine konvexe Oberfläche und eine konkave Oberfläche aufweist.

**Fig. 1**

EP 2 604 999 A1

**Beschreibung**

Die Erfindung betrifft ein Gasmessgerät mit einem ersten Prozessfenster zur absorptions-spektroskopischen in-situ Bestimmung mindestens eines chemischen und/oder physikalischen Parameters eines gasförmigen Messmediums.

Die Laser-Absorptions-Spektroskopie und insbesondere die sogenannte Diodenlaser-Absorptions-Spektroskopie mittels durchstimmbarem Laser, auch als TDLAS (tunable diode laser absorption spectroscopy) bezeichnet, eignet sich besonders gut für die Bestimmung von mindestens einem chemischen und/oder physikalischen Parameter eines gasförmigen Messmediums.

Mittels der Laser-Absorptions-Spektroskopie kann die Konzentration oder der Gehalt eines Gases, welches in einer Messumgebung oder einem Messmedium vorhanden ist, sehr genau bestimmt werden. Weiterhin können auch weitere Parameter wie beispielsweise Temperatur oder Druck bestimmt werden.

Im Falle der TDLAS wird das Messmedium mit der Strahlung eines durchstimmbaren Lasers durchstrahlt. Die Wellenlänge der Strahlung wird dabei in einem vorgegebenen Wellenlängenbereich periodisch moduliert, wobei der vom Laser durchlaufene Wellenlängenbereich vorzugsweise eine oder mehrere Absorptionsbanden des zu untersuchenden Gases umfasst. Der abgedeckte Wellenlängenbereich wird durch den verwendeten Laser, genauer den verwendeten Diodenlaser bestimmt. Es ist eine Vielzahl von Lasern und Diodenlasern bekannt. Sogenannte DFB-Laser (distributed feedback laser) können Wellenlängenbereiche zwischen etwa 700 nm und etwa 3 $\mu$m abdecken. Sogenannte VCSEL-Laser (vertical-cavity surface-emitting laser) können Wellenlängenbereiche bis etwa 2.1 $\mu$m und QCL-Laser (quantum cascade laser) Wellenlängebereiche oberhalb von etwa 3.5 $\mu$m oder sogar oberhalb von etwa 4.3 $\mu$m abdecken.

Gemessen wird meist in einer Transmissions-Anordnung, wobei auch Messungen in Transflexions-Anordnung bekannt sind. Die vom Laser oder Diodenlaser ausgesandte Strahlung wird durch das Messmedium gelenkt und nach Interaktion mit demselben von einem geeigneten Detektor detektiert.

Detektiert werden können Gase, welche mindestens eine charakteristische Absorptionsbande oder Absorptionslinie in dem verwendeten Wellenlängenbereich aufweisen. Gase welche mittels Laser-Absorptions-Spektroskopie detektiert werden können, umfassen unter anderem Sauerstoff ($O_2$), Kohlendioxid ($CO_2$), Kohlenmonoxid (CO), Stickoxide ($NO_x$), Amine, Ammoniak ($NH_3$), Schwefelwasserstoffe ($H_2S$), Schwefeloxide ($SO_2$), Halogenwasserstoffverbindungen, wie HCl oder HF, gasförmiges Wasser oder sogar Mischungen daraus.

Für die Bestimmung von beispielsweise Sauerstoff eignet sich insbesondere ein Laser, welcher beispielsweise im Bereich von 760 nm emittiert oder moduliert werden kann, und für die Bestimmung von $NH_3$ ein Laser, welcher im Bereich um 1500 nm emittiert oder moduliert werden kann, da in diesen Bereichen jeweils eine starke Absorptionsbande von Sauerstoff oder $NH_3$ liegt.

Die Begriffe "Messumgebung" und "Messmedium" bezeichnen hier die Umgebung bzw. das Medium in welchem gemessen wird bzw. welches analysiert wird.

Die US 5,331,409 A offenbart ein Gasmessgerät mit einem durchstimmbaren Diodenlaser und einer angeschlossenen Gasmessanordnung, in die das zu untersuchende Messmedium eingeleitet wird und welche mehrere Gasmesszellen umfasst. Die Strahlung wird durch eine Kollimator-Linse in eine erste Messzelle gelenkt, die einen Beamsplitter aufweist, welcher die Strahlung durch jeweils eine Fokussierlinse in eine weitere Messzelle oder eine Referenzzelle lenkt. Die Messzelle und die Referenzzelle weisen jeweils einen Detektor auf. Der Einsatz dieser Linsen führt jedoch zum Auftreten von Interferenzen, welche die Detektion der Absorptionsbanden stören. Um diesen Effekt möglichst zu unterdrücken, wurden die Messzellen hier besonders lang ausgestaltet.

Beim Einsatz eines Gasmessgeräts in einer Prozessumgebung und insbesondere in einem Behältnis wird die Laserstrahlung typischerweise durch ein Prozessfenster in das Messmedium oder die Messumgebung eingekoppelt. Das Prozessfenster kann wie in der US 5,331,409 A offenbart eine Linse sein. Weiterhin sind Gasmessgeräte bekannt, welche Keilfenster oder normale Fenster als Prozessfenster aufweisen. Die Keilfenster werden häufig leicht schräg zur optischen Achse eingebaut. Normale Fenster werden meist unter dem Brewsterwinkel, also ebenfalls schräg zur optischen Achse, eingebaut. Bereits der Einbau der Prozessfenster unter dem Brewesterwinkel kann je nach Ausrichtung der Laserpolarisation zu Signalverlusten führen, was selbst durch eine möglichst genaue Justierung nicht immer vollständig unterdrückt werden kann. Nachteilig an diesen Lösungen ist zudem, dass häufig ein Fensterpaar eingebaut werden muss, um den Strahlengang ausreichend zu korrigieren und zudem, dass die Prozessfenster insbesondere mit einer Antireflex-Beschichtung beschichtet werden müssen, um sonst auftretende Interferenzeffekte zu unterdrücken. Interferenzeffekte können die Messergebnisse negativ beeinflussen und zudem zu einer temperaturabhängigen Drift führen. Hinzu kommt, dass der präzise Einbau solcher Fenster aufgrund der notwendigen Justierung zeitintensiv und die Herstellung hochpräziser Keilfenster kostspielig ist.

Beim Einsatz von Gasmessgeräten in Prozessanlagen oder Messumgebungen, vor allem in solchen in denen raue Bedingungen herrschen, ist der Einsatz beschichteter optischer Element nachteilig, da unter Umständen die Beschichtung angegriffen und beschädigt oder zerstört werden kann, was wiederum zu einem Verlust an Messgenauigkeit führt. Unter rauen Bedingungen werden hier Messumgebungen mit beispielsweise relativ hohen oder niedrigen Temperaturen, relativ hohen oder niedrigen Drücken, und/oder solche in welchen aggressive Chemikalien eingesetzt werden, verstanden. Gerade beim Einsatz in Prozessanlagen oder in der Atmosphären-Forschung ist es zudem sehr schwierig die ausreichende Justierung der Prozessfenster während des gesamten Messzyklus und/oder der Lebenszeit des Gasmessgeräts zu gewährleisten, da dieses nur nach Ausbau des Gasmessgeräts nachjustiert werden kann.

Absorptions-spektroskopische Gasmessgeräte können beispielweise zur in-situ Überwachung von Gaskonzentrationen, insbesondere von Sauerstoff, in potentiell explosionsgefährdeten Prozessen bzw. Prozessanlagen, wie beispielsweise in der Ölraffinerie oder bei Verbrennungsprozessen, eingesetzt werden. Ein weiteres Anwendungsgebiet stellt die Atmosphären-Forschung da.

Zur Kontrolle und/oder Analyse derartiger Prozesse und Messumgebungen ist es besonders wichtig, dass die eingesetzten Gasmessgeräte mit hoher Verlässlichkeit, möglichst wartungsfrei Messwerte mit einer hohen Reproduzierbarkeit liefern.

Daher besteht die Aufgabe dieser Erfindung darin, ein absorptions-spektroskopisches Gasmessgerät mit einem Prozessfenster für die in-situ Bestimmung bereitzustellen, welches besonders robust ist und auch unter rauen Prozessbedingungen möglichst ohne Verlust der Messgenauigkeit und Reproduzierbarkeit eingesetzt werden kann.

Gelöst wird diese Aufgabe durch ein Gasmessgerät zur absorptions-spektroskopischen in-situ Bestimmung mindestens eines chemischen und/oder physikalischen Parameters eines gasförmigen Messmediums. Das Gasmessgerät umfasst ein erstes Gehäuse, mindestens einen Laser als Strahlungsquelle, mindestens ein erstes Prozessfenster zur Einkopplung der vom Laser ausgesandten Strahlung in das gasförmige Messmedium und mindestens einen Detektor, mit welchem die Strahlung nach Wechselwirkung mit dem Messmedium detektiert wird. Erfindungsgemäss ist das erste Prozessfenster als Meniskuslinse ausgestaltet, welche eine konvexe Oberfläche und eine konkave Oberfläche aufweist.

Aufgrund der optischen Eigenschaften der Meniskuslinse, kann ein Gasmessgerät mit einem unbeschichteten Prozessfenster, welches insbesondere keine Anti-Reflektions-Beschichtung aufweist, realisiert werden. Dieses ist gerade beim Einsatz von Gasmessgeräten in Prozessanlangen zur in-situ Bestimmung vorteilhaft, da so optische Fehler und Interferenzen aufgrund des Prozessfensters weitestgehend vermieden werden können. Die Messstabilität und Reproduzierbarkeit der Messergebnisse können langfristig gewährleistet und die Nachweisgrenze kann verbessert werden. Ein als Meniskuslinse ausgestaltetes erstes Prozessfenster kann zudem mit verschiedenen bekannten Lasern oder Diodenlasern, welche Strahlung einer festen Wellenlänge emittieren oder durchstimmbar sind, in erfindungsgemässen Gasmessgeräten eingesetzt werden, solange das erste Prozessfenster für die eingesetzte Strahlung optisch durchlässig ist.

Geeignete Materialien für ein Prozessfenster sind beispielsweise Borosilikat Gläser, Quarz, Quarzgläser, Saphir, Diamant, Zinkselenid oder Germanium. Selbstverständlich kann ein erfindungsgemässes Prozessfenster auch aus einem anderen für optische Linsen bekannten Material, insbesondere aus einem optischen Glas, gefertigt werden.

Als Detektor eignen sich je nach Wellenlängenbereich des eingesetzten Lasers verschiedene in der Laser-Absorptions-Spektroskopie bekannte Detektoren, wie beispielsweise Photodioden, Photomultiplier, Photozellen, InGaAs-Detektoren oder pyroelektrische Detektoren, wobei auch andere bekannte Strahlungsdetektoren eingesetzt werden können.

Ein erfindungsgemässes absorptions-spektroskopisches Gasmessgerät kann beispielsweise zur Untersuchung eines gasförmigen Messmediums in einer beliebigen Messumgebung verwendet werden. Beim Einsatz in einer Prozessanlage wird das Gasmessgerät vorzugsweise zur Bestimmung einer Parametes in einem Behältnis eingesetzt, wobei hier als "Behältnis" verschieden Bauteile einer Prozessanlage, wie insbesondere Reaktionsbehälter sowie auch alle Arten von Zu- oder Ableitungen verstanden werden, in welchen absorptions-spektroskopische Untersuchungen durchgeführt werden können. Weiterhin fallen darunter auch andere Behältnisse in denen gasförmige Messmedien, Gase oder Gasmischungen gelagert, transportiert oder verwendet werden können.

In einem Ausführungsbeispiel kann das Gasmessgerät ferner ein optisches Umlenkelement umfassen, welches die durch das erste Prozessfenster ins Messmedium eingekoppelte Strahlung wieder zum ersten Prozessfenster zurücklenkt, so dass die Strahlung wieder aus dem Messmedium ausgekoppelt werden kann.

Das optische Umlenkelement kann beispielsweise mindestens eines der folgenden optischen Elemente umfassen: eine Katzenaugenoptik, ein Tripelprisma, einen Tripelspiegel, einen planarer Spiegel und/oder einen abbildender Spiegel.

In einem weiteren Ausführungsbeispiel des Gasmessgeräts können der Detektor und der Laser im ersten Gehäuse angeordnet sein. Das erste Prozessfenster dient in dieser Anordnung zum Einkoppeln der vom Laser ausgesandten Strahlung in das Messmedium sowie nach Wechselwirkung mit dem Messmedium auch zum Auskoppeln der Strahlung aus dem Messmedium.

In einem weiteren Ausführungsbeispiel kann das Gasmessgerät ein zweites Gehäuse und ein zweites Prozessfenster aufweisen, wobei der Detektor oder das Umlenkelement im zweiten Gehäuse angeordnet sind.

Zwischen dem ersten Prozessfenster und dem Umlenkelement oder dem zweiten Prozessfenster bildet sich im Betrieb eine Messstrecke aus, welche zur absorptionsspektroskopischen Detektion mindestens eines chemischen und/oder physikalischen Parameters dient. Bei Verwendung eines Umlenkelements durchläuft die vom Laser ausgesandte Strahlung die Messstrecke zweimal auf dem Weg vom Laser zum Detektor.

In einem weiteren Ausführungsbeispiel kann das optische Umlenkelement im zweiten Gehäuse angeordnet sein, so dass durch das erste Prozessfenster in das Messmedium eingekoppelte Strahlung zunächst durch das zweite Prozessfenster aus dem Messmedium ausgekoppelt und auf das optische Umlenkelement gelenkt wird. Die Strahlung wird vom optischen Umlenkelement umgelenkt und wieder durch die beiden Prozessfenster und das Messmedium zum Detektor zurück gelenkt, welcher in dieser Anordnung vorzugsweise im ersten Gehäuse angeordnet ist. Durch die doppelte Transmission der Strahlung durch das Messmedium kann die Nachweisgrenze der Absorptionsmessung erhöht werden, da gemäss des Lambert-Beerschen-Gesetzes die Länge der Messstrecke direkt proportional zur Absorptionsintensität ist.

Die Anordnung von Laser, Detektor und/oder Umlenkelement in zwei Gehäusen ist vor allem für den Einsatz in einer sogenannten Cross-Stack-Anordnung oder einer Open-Path-Anordnung geeignet. Bei einer Cross-Stack-Anordnung befindet sich das Messmedium in einem geschlossenen oder offenen Behältnis, das durchstrahlt wird, beispielsweise einer Rohrleitung. Eine Open-Path-Anordnung wird vor allem für sehr lange Messstrecken verwendet, beispielsweise in der Atmosphären-Forschung oder für die Umwelt-Forschung, insbesondere für die Luft-Analyse. Für eine Cross-Stack-oder Open-Path-Anordnung kann entweder im ersten Gehäuse der Laser und im zweiten Gehäuse der Detektor oder im ersten Gehäuse Laser und Detektor und im zweiten Gehäuse das Umlenkelement angeordnet sein.

Vorzugsweise ist auch das zweite Prozessfenster als Meniskuslinse ausgebildet, welche eine konvexe und eine konkave Oberfläche aufweist. Die Verwendung von zwei Meniskuslinsen als erstes und zweites Prozessfenster ist vorteilhaft, da so beide Prozessfenster ohne Beschichtung eingesetzt werden können.

Die Dicke der Meniskuslinse kann je nach Einsatzbedingungen angepasst werden, insbesondere kann über die Dicke der Meniskuslinse die Druckbeständigkeit derselben in einem gewissen Bereich angepasst werden. Je dicker die Meniskuslinse, desto druckbeständiger ist das derartig ausgestaltete Prozessfenster und des zugehörigen Gassmessgeräts.

Meniskuslinsen können fokal, also abbildend bzw. als Streu- und/oder Sammellinse, oder afokal, also nicht-abbildend, ausgebildet sein. Eine fokale Meniskuslinse hat meist eine endliche Brennweite, eine afokale eine im Wesentlichen unendliche Brennweite.

Die Geometrien der als erstes und/oder zweites Prozessfenster eingesetzten fokalen Meniskuslinse, insbesondere deren Krümmungsradien, Brechzahl und Linsenmittendicke, können für jedes Gasmessgerät berechnet und somit möglichst exakt auf die Länge der Messstrecke und/oder weitere eingesetzte Komponenten, wie beispielsweise Laser, Detektor und/oder optisches Umlenkelement abgestimmt werden. Zur Gewährleistung reproduzierbarer Messergebnisse sollte die Messstrecke bei Verwendung fokaler Meniskuslinsen als erstes und/oder zweites Prozessfenster eine im Wesentlichen feste Länge aufweisen.

Auf Grund ihrer abbildenden Eigenschaften ist die Anordnung als erstes und/oder zweites Prozessfenster eingesetzter fokaler Meniskuslinsen in Bezug auf die Ausrichtung ihrer konkaven und konvexen Oberfläche im Wesentlichen vorgegeben.

Bei Verwendung in einem erfindungsgemässen Gasmessgerät mit nur einem ersten Prozessfenster sollte insbesondere die konvexe Oberfläche einer fokalen Meniskuslinse gegen das Messmedium ausgerichtet werden, da so die in das Messmedium eingekoppelte Strahlung dieses als möglichst breiten Strahl durchstrahlt und die ausgekoppelte Strahlung auf den Detektor und/oder das optische Umlenkelement fokussiert werden kann. Beim Einsatz eines ersten und eines zweiten Prozessfensters, welche beide als fokale Meniskuslinse ausgebildet sind, sollte insbesondere die jeweils konkave Oberfläche der Meniskuslinse dem Messmedium zugewandt sein, da sich so ein gemeinsamer Fokus des Linsenpaares im Messmedium ausbilden kann.

In einem bevorzugten Ausführungsbeispiel wird daher insbesondere eine afokale Meniskuslinse als erstes Prozessfenster und/oder als zweites Prozessfenster eingesetzt. Weiterhin kann auch eine afokale Meniskuslinse zusammen mit einer fokalen Meniskuslinse eingesetzt werden.

Der Einsatz einer afokalen Meniskuslinse ist besonders vorteilhaft, da aufgrund der fehlenden abbildenden Eigenschaften dieser Meniskuslinse eine besondere Ausrichtung oder Justierung der afokalen Meniskuslinse zum Messstrahl unnötig ist.

Ein Gasmessgerät mit einem als afokale Meniskuslinse ausgestaltetem ersten und/oder zweiten Prozessfenster zeichnet sich dadurch aus, dass es unabhängig von der Länge der Messstrecke ist, was eine hohe Unempfindlichkeit in Bezug auf die Justierung bedingt und das Gasmessgerät sehr robust macht. Zudem ermöglicht insbesondere eine afokale Meniskuslinse aufgrund ihrer optischen Eigenschaften, die Laserstrahlung so in das Messmedium oder die Messumgebung ein- und/oder auszukoppeln, dass die Bildung störender Interferenzen am Detektor weitestgehend vermieden wird.

Ein weiterer Vorteil der Verwendung afokaler Meniskuslinsen als erstes und/oder zweites Prozessfenster liegt darin, dass afokale Meniskuslinsen wie Planplatten in beliebiger Orientierung im Gasmessgerät angeordnet werden können. Eine afokale Meniskuslinse kann somit mit der konkaven oder konvexen Oberfläche zum Messmedium ausgerichtet werden, ohne dass sich die optischen Eigenschaften des Gasmesgeräts ändern. Es ist sogar möglich, dass bei einem Gasmessgerät mit zwei als afokale Meniskuslinse ausgestalteten Prozessfenstern die afokalen Meniskuslinsen gleich oder unterschiedlich zum Messmedium orientiert sein können. In jeder Anordnung bleibt das Gasmessgerät robust gegenüber geometrischen Störungen und ist zudem im Wesentlichen längenunabhängig in Bezug auf die Messstrecke.

Berechnet werden können geeignete afokale Meniskuslinsen mittels den folgenden Formeln zur Berechnung der Linsendicke, genauer der Linsenmittendicke, und zur Berechnung des Konvexradius R2:

$$d = (R2-R1) \times (n / (n-1))$$

$$R2 = R1 + d / a \qquad \text{mit } a = n / (n+1)$$

Wobei n die Brechzahl des Linsenmaterials, d die Mittendicke der Linse, R1 den Konkavradius und R2 den Konvexradius bezeichnet. Eine gemäss diesen Formeln berechnete Meniskuslinse weist im Wesentlichen keine abbildende Wirkung auf, ist also afokal. Eine derartige afokale Meniskuslinse weist jedoch eine geringe Vergrösserung oder Verkleinerung der durchlaufenden Strahlung, genauer des Strahlenbündels, ähnlich einem auf unendlich eingestellten Fernglas, genauer des Strahlenbündels auf. Dieses führt beispielsweise zu einer vorteilhaften Abstandsänderung der beiden Messstrahlen, also der Strahlung vom Laser zum Umlenkelement und der vom Umlenkelement zum Detektor.

In einem weiteren Ausführungsbeispiel umfasst das Gasmessgerät ferner eine Gassonde, welche einen im Wesentlichen zylinderförmigen Sondenkörper mit mindestens einer Prozessöffnung umfasst, durch welche im Betrieb das Messmedium in das Innere des Sondenkörpers eindringen kann.

Die Ausgestaltung des Gasmessgeräts mit der Gassonde ist insbesondere für Messungen im Inneren eines Behältnisses vorteilhaft, da so eine definierte Messstrecke im Inneren des Behältnisses ausgebildet werden kann.

Bevorzugt umfasst der Sondenkörper im Wesentlichen einen metallischen Werkstoff, wie beispielsweise einen Edelstahl, eine Nickellegierung, insbesondere Hastelloy, Titan, Zirkon oder Tantal; oder einen Kunststoff, wie beispielsweise PEEK, PMMA oder POM; oder Mischungen daraus.

Die Gassonde kann als zweites Gehäuse wirken oder zwischen dem ersten und zweiten Gehäuse angeordnet sein, wobei jeweils ein Ende der Gassonde mit dem ersten Gehäuse und/oder mit dem zweiten Gehäuse verbunden ist.

Weiterhin kann die Gassonde mindestens einen Spülgasanschluss für ein Spülgas sowie eine Spülgasleitung umfassen. Der Einsatz eines Spülgases dient zur Verbesserung des Messergebnisses, da auf diese Weise die Gassonde ganz oder teilweise mit dem Spülgas gespült werden kann, so dass Ablagerungen und/oder unerwünschte Reste des Messmediums entfernt werden können und so für jede Messung vergleichbare Startbedingungen erzeugt werden können.

Vorzugsweise ist die Spülgasleitung derart in der Sonde angeordnet, dass im Betrieb das erste und/oder das zweite Prozessfenster mediumsseitig ein Spülgaspolster aufweisen. Auf diese Weise können Ablagerungen auf der Meniskuslinse stark reduziert werden, wodurch die Messgenauigkeit erhöht werden kann.

In einem weiteren Ausführungsbeispiel des Gasmessgeräts ist das optische Umlenkelement dichtungsfrei am vom ersten Gehäuse abgewandten Ende der Gassonde befestigt. Zudem umfasst die Spülgasleitung im Bereich des optischen Umlenkelements eine Austrittsöffnung, so dass das optische Umlenkelement im Betrieb vom Spülgas umspült wird.

Das erste Prozessfenster kann im ersten Gehäuse oder am dem ersten Gehäuse zugewandten Ende der Gassonde angeordnet sein. Das zweite Prozessfenster kann im zweiten Gehäuse oder am dem ersten Gehäuse abgewandten Ende der Gassonde angeordnet sein.

Weiterhin kann das Gasmessgerät mindestens einen Anschluss oder Flansch zum Anschluss des Gasmessgeräts an ein Behältnis umfassen. Der mindestens eine Anschluss oder Flansch kann je nach Ausgestaltung am ersten Gehäuse, am zweiten Gehäuse und/oder an einem und/oder beiden Enden der Gassonde angeordnet sein.

Das erfindungsgemässe Gasmessgerät kann insbesondere zur absorptions-spektroskopischen Bestimmung eines oder mehrerer der folgenden chemischen und/oder physikalischen Parameter herangezogen werden. Diese Parameter umfassen unter anderem die Temperatur oder den Druck des Messmediums und/oder die Konzentration eines Gases, wie beispielsweise Sauerstoff, Kohlendioxid, Kohlenmonoxid, Stickoxide, Amine, Ammoniak, Halogenwasserstoffe, Schwefelwasserstoffe, Schwefeloxide, Wasser oder Mischungen daraus.

Weiterhin kann das Gasmessgerät eine Steuer- und/oder Regeleinheit umfassen, welche zumindest teilweise im ersten und/oder zweiten Gehäuse angeordnet ist. Es ist auch möglich, dass die Steuer- und/der Regeleinheit im Wesentlichen als separates Gerät ausgestaltet ist, welches drahtlos oder drahtgebunden mit dem Gasmessgerät verbunden ist.

Als Laser umfasst das Gasmessgerät vorzugsweise einen durchstimmbaren Diodenlaser. Zur Sauerstoff-Bestimmung kann beispielsweise ein Laser oder Diodenlaser eingesetzt werden, welcher in einem Wellenlängenbereich von ca. 700 bis ca. 800 nm emittiert und/oder durchstimmbar ist, wobei der Wellenlängenbereich des Lasers zumindest eine der bekannten Sauerstoff-Absorptionsbanden umfasst. Verschiedene Ausführungsbeispiele eines erfindungsgemässen Gasmessgeräts werden anhand der folgenden Figuren näher beschrieben, wobei gleiche Elemente mit gleichen Bezugszeichen versehen sind. Die Figuren zeigen:

Fig. 1  Ein erstes Ausführungsbeispiel eines erfindungsgemässen Gasmessgeräts mit einem ersten Prozessfenster und einer Gassonde und angeschlossener Steuer- und/oder Regeleinheit;

Fig. 2  ein zweites Ausführungsbeispiel eines erfindungsgemässen Gasmessgeräts mit einem ersten und einem zweiten Prozessfenster und einer Gassonde, welche zwischen einem ersten und einem zweiten Gehäuse angeordnet ist, wobei im zweiten Gehäuse ein optisches Umlenkelement angeordnet ist;

Fig. 3  ein drittes Ausführungsbeispiel eines erfindungsgemässen Gasmessgeräts mit einem ersten und einem zweiten Prozessfenster und einer Gassonde, welche zwischen einem ersten und einem zweiten Gehäuse angeordnet ist, wobei im zweiten Gehäuse ein Detektor angeordnet ist;

Fig. 4  ein viertes Ausführungsbeispiel eines erfindungsgemässen Gasmessgeräts mit einem ersten und einem zweiten Prozessfenster und einem ersten und einem zweiten Gehäuse, wobei im ersten Gehäuse ein Laser und im zweiten Gehäuse ein Detektor angeordnet ist;

Fig. 5  eine Schnittzeichnung eines erfindungsgemässen Gasmessgeräts mit einem ersten Prozessfenster und einer Gassonde, einem optischen Umlenkelement und einer Spülgasleitung.

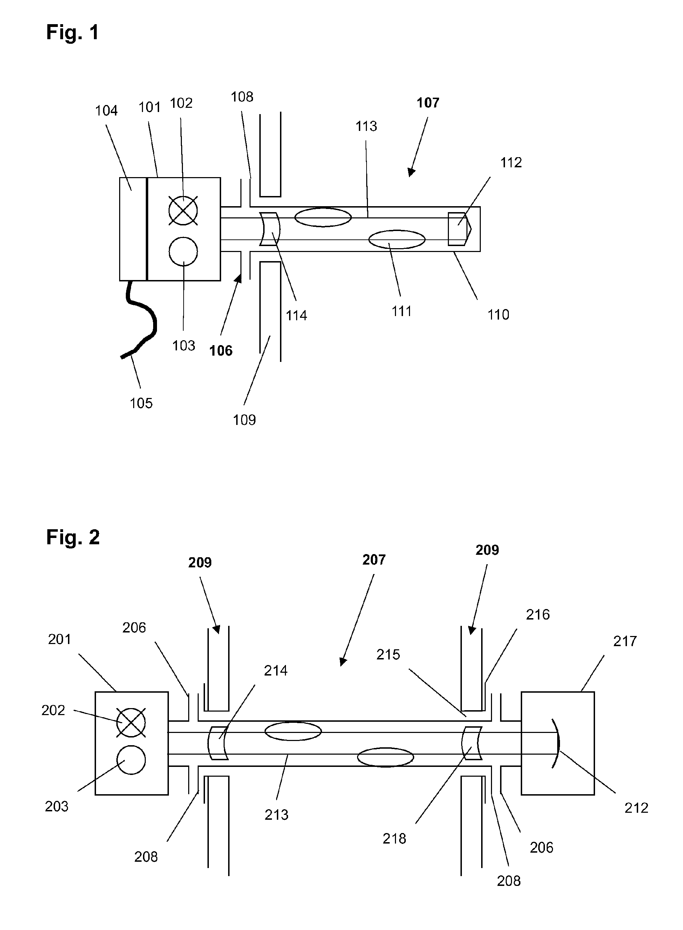

Figur 1 zeigt eine stark schematisierte Darstellung eines erfindungsgemässen Gasmessgeräts. Das Gasmessgerät umfasst ein erstes Gehäuse 101, in welchem ein Laser 102 als Strahlungsquelle und ein Detektor 103 angeordnet sind. Das erste Gehäuse 101 kann hier im Wesentlichen einem Spektrometer entsprechen und als Laser 102 einen durchstimmbaren Diodenlaser aufweisen, wie es für TDLAS eingesetzt wird und beispielsweise in der DE 20 2008 013 557 U1 offenbart ist. Das Gehäuse 101 ist mit einer hier nur angedeuteten Steuer- und/oder Regeleinheit 104 verbunden, welche wiederum über eine geeignete drahtlose oder wie hier gezeigt drahtgebunden Verbindung 105 mit einer übergeordneten Steueranlage, wie beispielsweise einer Prozessleitstelle verbunden sein kann.

Die Steuer- und/oder Regeleinheit 104 kann wie hier gezeigt an das Gehäuse 101 angeschlossen sein, sie kann jedoch auch teilweise im Gehäuse 101 angeordnet sein und mit diesem nur drahtlos oder drahtgebunden verbunden sein. Die Steuer- und/oder Regeleinheit 104 dient insbesondere dazu Steuerbefehle und/oder vorgegebene Parameter an das Gasmessgerät zu senden, den Laser 102 zu steuern sowie auch dazu die vom Detektor 103 aufgenommenen Daten und/oder Rohdaten zu erfassen und an eine geeignete Auswerteeinheit weiterzuleiten.

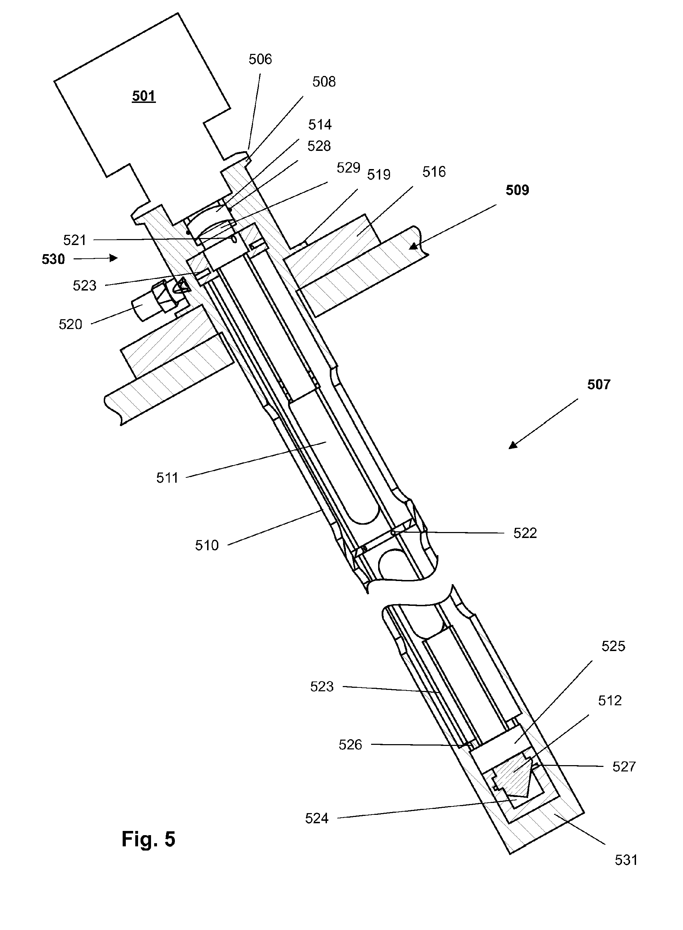

Weiterhin weist das Gehäuse 101 einen ersten Flansch 106 zum Anschluss an einen Gegenflansch 108 einer Gassonde 107 auf. Das Gasmessgerät kann, wie hier dargestellt über den Flansch 106 und den Gegenflansch 108 an einem Behältnis 109, dessen Wand hier angedeutet ist, angeschlossen werden. Vorzugsweise weist das Behältnis 109 dazu einen weiteren Flansch auf, wie es in Figur 2 gezeigt ist. Das Gasmessgerät kann auch, wie in Figur 5 gezeigt einen weiteren Flansch aufweisen, welcher zum Anschluss an das Behältnis 109 geeignet ist. Für Prozessanlagen sind verschiedene Flanschsysteme und -typen bekannt und werden hier daher nicht näher erläutert.

Die Gassonde 107 umfasst einen im Wesentlichen zylinderförmigen Sondenkörper 110, welcher über ein oder mehrere Prozessöffnungen 111 verfügt, über die ein Messmedium in die Gassonde eindringen kann oder diese durchströmen kann. Die Prozessöffnungen 111 können wir hier gezeigt versetzt oder entlang einer gemeinsamen Achse angeordnet sein, desweiteren ist es vorteilhaft, wenn eine Gassonde 107 mehrere einander gegenüberliegende Prozessöffnungen 111 aufweist, so dass das gasförmige Messmedium möglichst ungehindert durch den Sondenkörper 110 strömen kann.

Im dem Gehäuse 101 gegenüberliegenden Ende der Gassonde 107 befindet sich ein optisches Umlenkelement 112, welches dazu dient die vom Laser 102 ausgesandte Strahlung, wie in dem hier nur angedeuteten Strahlengang 113, zum Gehäuse 101 und insbesondere zum darin angeordneten Detektor 103 zurückzulenken. Auf diese Weise passiert die Strahlung auf dem Weg zwischen Laser 102 und Detektor 103 zweimal die Messstrecke im Messmedium. Als optisches Umlenkelement 112 können neben dem hier gezeigten Tripelprisma auch andere Elemente eingesetzt werden, wie beispielsweise mindestens eine Katzenaugenoptik, ein planarer oder abbildender Spiegel oder ein Tripelspiegel.

Als Prozessfenster 114 ist eine Meniskuslinse in der Gassonde 107 angeordnet. In Figur 1 ist konvexe Oberfläche der Meniskuslinse vom Messmedium zugewandt. In diesem Ausführungsbeispiel kann entweder eine fokale oder eine afokale Meniskuslinse eingesetzt werden.

Das Prozessfenster 114 ist gegen den Sondenkörper 110 mittels eines geeigneten Dichtmittels, beispielsweise einem O-Ring, abgedichtet. Es ist sehr vorteilhaft das Prozessfenster 114 in der Gassonde 107 anzuordnen, da so die Gassonde 107 gegen aussen abgeschlossen ist und kein weiteres Fenster zur Trennung zwischen Behältnis 109 und der Umgebung benötigt wird. Zudem kann so das Gehäuse 101, welches im Wesentlichen das Spektrometer umfasst, einfach abgebaut und beispielsweise unter kontrollierten Bedingungen justiert und/oder kalibriert werden. Zudem ist es so möglich, das Spektrometer auszutauschen, so dass beispielsweise im selben Behältnis oder derselben Messumgebung Messungen mit unterschiedlichem Laserwellenlängenbereichen durchgeführt werden können.

Figur 2 zeigt eine stark schematisierte Darstellung eines zweiten Ausführungsbeispiels des erfindungsgemässen Gasmessgeräts. Wie hier gezeigt ist das Gasmessgerät in eine Rohrleitung oder ein vergleichbares Behältnis 209 eingebaut. In der Wand des Behältnisses 209 befinden sich einander gegenüberliegende Durchführungen 215 zur Aufnahme des Gasmessgeräts, welche aussen jeweils einen Flanschstutzen 216 aufweisen.

Das Gasmessgerät umfasst ein erstes Gehäuse 201, in welchem ein Laser 202 und ein Detektor 203 angeordnet sind, und ein dem ersten Gehäuse 201 gegenüberliegendes Gehäuse 217, in welchem ein optisches Umlenkelement 212, hier ein Spiegel, angeordnet ist. Beide Gehäuse 201, 217 weisen einen Flansch 206 auf, mit welchen das jeweilige Gehäuse an eine Gassonde 207 und/oder am Behältnis 209 befestigt werden kann.

Die Gassonde 207 weist mehrere Prozessöffnungen 211 auf, sowie ein erstes und ein zweites Prozessfenster 214, 218, welche jeweils an einem Ende der Gassonde im Strahlengang 213 angeordnet sind. Beide Prozessfenster 214, 218 sind als Meniskuslinsen ausgestaltet. Das erste Prozessfenster 214 ist so im Strahlengang platziert, dass die konkave Oberfläche der Meniskuslinse dem Messmedium zugewandt ist, und das zweite Prozessfenster 218 ist so platziert, dass die konvexe Oberfläche der Meniskuslinse dem Messmedium zugewandt ist. Vorzugsweise können in dieser Anordnung afokale Meniskuslinsen als erstes und zweites Prozessfenster 214, 218 eingesetzt werden. Die beiden Prozessfenster 214, 218 schliessen wiederum die Gassonde und damit das Behältnis 209, genauer die Durchführungen 215 nach aussen ab, so dass eines oder auch beide Gehäuse 201, 212 entfernt werden können, ohne dass das Messmedium aus dem Behältnis 209 in die Umgebung austritt.

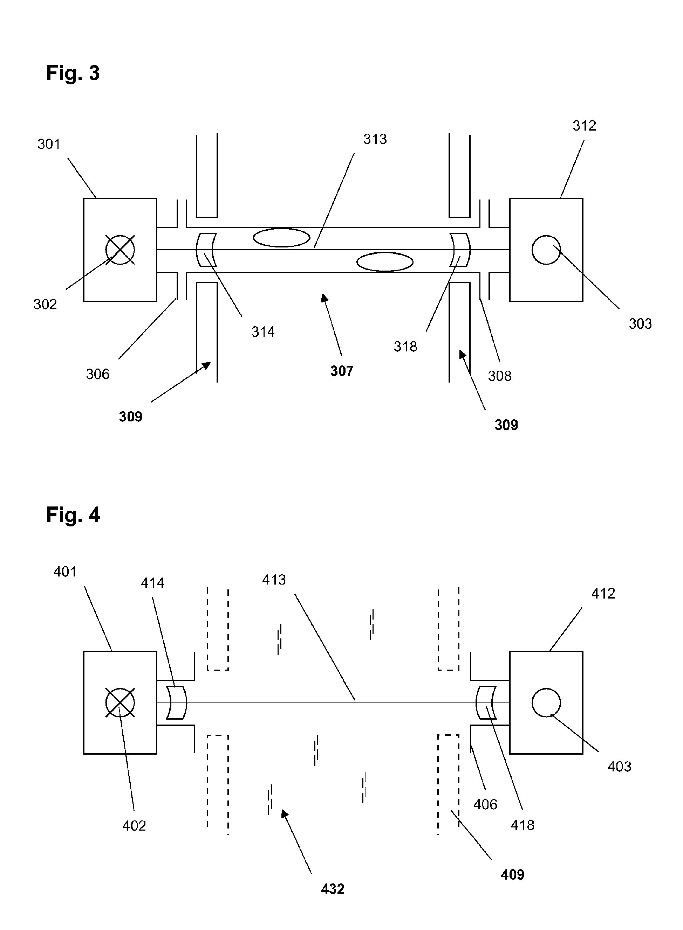

Figur 3 zeigt eine stark schematisierte Darstellung einer dritten Ausführung des Gasmessgeräts. Im Gegensatz zu den in den Figuren 1 und 2 gezeigten Gasmessgeräten, ist hier ein Laser 302 in einem ersten Gehäuse 301 und ein Detektor 303 in einem zweiten Gehäuse 312 angeordnet. Die beiden Gehäuse 312 sind wiederum über geeignete Flansche mit einer Gassonde 307 und/oder einem Behältnis 309, beispielsweise einer Rohrleitung verbunden. Die Gassonde 307 entspricht im Wesentlichen der bereits in Figur 2 gezeigten, wobei sowohl das erste als auch das zweite Prozessfenster 314, 318 eine vorzugsweise afokale Meniskuslinse aufweisen, deren konkave Oberfläche zum Messmedium ausgerichtet ist. Aufgrund der räumlichen Trennung von Laser 302 und Detektor 303 passiert die Strahlung des Lasers 302 nur einmal das Messmedium, wie durch den Strahlengang 313 angedeutet.

Figur 4 zeigt eine stark schematisierte Darstellung einer vierten Ausführung eines erfindungsgemässen Gasmessgeräts. Wie bereits in Figur 3 gezeigt, umfasst das Gasmessgerät einen Laser 402, welcher in einem ersten Gehäuse 401 angeordnet ist, und einen Detektor 403, welcher in einem zweiten Gehäuse 412 angeordnet ist. Die beiden Gehäuse 401, 412 sind einander gegenüberliegend angeordnet und können, wie hier nur angedeutet an einem Behältnis 409, beispielsweise einer Zu- oder Ableitung, befestigt sein. Es wäre auch möglich, dass diese Anordnung als sogenannte Open-Path-Anordnung zur Analyse einer Messumgebung ausserhalb eines Behältnisses verwendet wird. Im Gegensatz zu den in den Figuren 1 bis 3 gezeigten Ausführungen weisst die vierte Ausführung keine Gassonde auf. In jedem Gehäuse 401, 412 ist ein Prozessfenster 414, 418 angeordnet, welches als Meniskuslinse ausgebildet ist, deren konvexe Oberfläche dem Messmedium 432 zugewandt ist. Als erstes und/oder zweites Prozessfenster 414, 418 können sowohl afokale als auch fokale Meniskuslinsen eingesetzt werden. Der Strahlengang 413 verläuft hier direkt durch die das Messmedium 432 enthaltende Messumgebung bzw. durch das Behältnis 409.

Figur 5 zeigt eine Schnittzeichnung eines erfindungsgemässen Gasmessgeräts. Das Gasmessgerät umfasst ein erstes Gehäuse 501 mit einem Laser und einem Detektor. Das erste Gehäuse 501 ist mittels eines Flansches 506 lösbar an einem Gegenflansch 508 einer Gassonde 507 befestigt.

Die Gassonde 507 umfasst einen Flanschkörper 530, welcher mit einem zylinderförmigen Sondenkörper 510 verbunden ist. Im Flanschkörper 530 ist als Prozessfenster 521 eine vorzugsweise afokale Meniskuslinse so angeordnet, dass ihre konkave Oberfläche dem Messmedium zugewandt ist. Das Prozessfenster 521 ist durch eine Dichtung 528, hier ein O-Ring, dichtend in den Flanschkörper 530 eingepasst, so dass auch ohne Gehäuse 101 kein Messmedium aus dem Behältnis 509 durch die Gassonde 507 austreten kann.

Im Sondenkörper 510 sind mehrere Prozessöffnungen 511 ausgebildet, so dass ein gasförmiges Messmedium durch den Sondenkörper 510 strömen kann. Der Flanschkörper 530 umfasst einen weiteren Flansch 519, über welchen die Gassonde 507 mit einem Flansch 516 in der Wand eines Behältnisses 509 verbunden ist.

Die Gassonde 507 endet in einem Zapfen 531, in welchem ein optisches Umlenkelement 512 dichtungsfrei in der Aufhängung 527 aufgehängt ist. Das optische Umlenkelement 512 ist hier als Tripelprisma ausgestaltet.

Weiterhin befindet sich am Flanschkörper 530 ein Gaseinlass 520 für ein Spülgas. Das Spülgas kann über eine parallel zur Längsachse des Sondenkörpers verlaufende Spülgasleitung 523 im Sondenkörper 510 so verteilt werden, dass sich im Betrieb zumindest im Bereich 529 vor dem Prozessfenster 514 ein Spülgaspolster ausbilden kann. Ebenso kann das optische Umlenkelement 512 von dem Spülgas umspült werden, so dass die Bereiche 524 und 525 im Betrieb ebenfalls ein Spülgaspolster aufweisen. Dazu wird das Spülgas vom Gasanschluss über die Spülgasleitung 523 durch den Sondenkörper 510 geleitet und tritt durch die Öffnungen 521, 522 und 526 an verschiedenen Stellen im Sondenkörper 510 aus der Spülgasleitung 523 aus. Die Öffnung 521 befindet sich im Flanschkörper, die Öffnungen 522 zwischen dem Flanschkörper 530 und dem Zapfen 531 und die Öffnungen 526 befinden sich in der Nähe des optischen Umlenkelements 512. Die in Figur 5 gezeigte Ausgestaltung der Gassonde mit Spülgasanschluss und Spülgasleitung kann selbstverständlich auch in den zuvor gezeigten Gasmessgeräten mit Gassonde realisiert werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere können fokale und/oder afokale Meniskuslinsen als erstes und/oder zweites Prozessfenster eingesetzt werden, wobei fokale Meniskuslinsen mit eine vorbestimmten Ausrichtung und einer vorbestimmten Lage im optischen System ihrer konvexen/konkaven Oberfläche im Strahlengang angeordnet werden müssen. Afokale Meniskuslinsen können in beliebiger Ausrichtung ihrer konvexen/konkaven Oberfläche zum Strahlengang angeordnet werden. Weiterhin können die in den Figuren beispielhaft gezeigten Anordnungen mit unterschiedlichen Umlenkelementen realisiert werden.

**Bezugszeichenliste**

| | |
|---|---|
| 101, 201, 301, 401, 501 | Erstes Gehäuse |
| 102,202,302,402 | Laser |
| 103, 203, 303, 403 | Detektor |
| 104 | Steuer- und/oder Regeleinheit |
| 105 | Verbindung |
| 106, 206, 306, 506 | Flansch |
| 107,207,307,507 | Gassonde |
| 108, 208, 308, 508 | Flansch |
| 109, 209, 309, 409, 509 | Behältnis / Behältniswand |
| 110,210,310,510 | Sondenkörper |
| 111, 211, 311, 511 | Prozessöffnung |
| 112, 212, 512 | Optisches Umlenkelement |
| 113, 213, 313, 413, 513 | Strahlengang |
| 114, 214, 314, 414, 514 | Erstes Prozessfenster |
| 215 | Durchführung |
| 216 | Flansch |
| 217, 317, 417 | Zweites Gehäuse |

| | |
|---|---|
| 218, 318, 418 | Zweites Prozessfenster |
| 519 | Flansch |
| 520 | Gasanschluss |
| 521 | Öffnung |
| 522 | Öffnung |
| 523 | Spülgasleitung |
| 524 | Bereich |
| 525 | Bereich |
| 526 | Öffnung |
| 527 | Halterung |
| 528 | Dichtung |
| 529 | Bereich |
| 530 | Flanschkörper |
| 531 | Zapfen |
| 432 | Messmedium |

**Patentansprüche**

1. Gasmessgerät zur absorptions-spektroskopischen in-situ Bestimmung mindestens eines chemischen und/oder physikalischen Parameters eines gasförmigen Messmediums (432), wobei das Gasmessgerät ein erstes Gehäuse (101, 201, 301, 401, 501); mindestens einen Laser (102, 202, 302, 402) als Strahlungsquelle, welcher im ersten Gehäuse (101, 201, 301, 401, 501) angeordnet ist; mindestens ein ersten Prozessfenster (114, 214, 314, 414, 514) zur Einkopplung der vom Laser (102, 202, 302, 402) ausgesandten Strahlung in ein Messmedium (432); und mindestens einen Detektor (103, 203, 303, 403), mit welchem die Strahlung nach Wechselwirkung mit dem Messmedium (432) detektiert wird, umfasst; **dadurch gekennzeichnet, dass** das erste Prozessfenster (114, 214, 314, 414, 514) als Meniskuslinse ausgestaltet ist, welche eine konvexe Oberfläche und eine konkave Oberfläche aufweist.

2. Gasmessgerät gemäss Anspruch 1, **dadurch gekennzeichnet, dass** dieses ferner ein optisches Umlenkelement (112, 212, 512) umfasst, welches die in das Messmedium eingekoppelte Strahlung zum ersten Prozessfenster (114, 214, 514) zurücklenkt.

3. Gasmessgerät gemäss Anspruch 2, **dadurch gekennzeichnet, dass** das optische Umlenkelement (112, 212, 512) mindestens eine Katzenaugenoptik, mindestens ein Tripelprisma, mindestens einen Tripelspiegel, mindestens einen planaren oder abbildenden Spiegel umfasst.

4. Gasmessgerät gemäss einem der Ansprüche 1 oder 2, **dadurch gekennzeichnet, dass** der Detektor (103, 203) und der Laser (102, 202) im ersten Gehäuse (101, 201, 501) angeordnet sind und dass das erste Prozessfenster (114, 214, 514) zum Einkoppeln der vom Laser (102, 202) ausgesandten Strahlung in das Messmedium sowie nach Wechselwirkung mit dem Messmedium auch zum Auskoppeln der Strahlung aus dem Messmedium dient.

5. Gasmessgerät gemäss einem der Ansprüche 1 oder 2, **dadurch gekennzeichnet, dass** dieses ferner ein zweites Gehäuse (217, 317, 417) und ein zweites Prozessfenster (218, 318, 418) umfasst, wobei der Detektor (303, 403) oder das optische Umlenkelement (212) im zweiten Gehäuse angeordnet ist.

**6.** Gasmessgerät gemäss Anspruch 5, **dadurch gekennzeichnet, dass** das zweite Prozessfenster (218, 318, 418) als Meniskuslinse ausgebildet ist, welche eine konvexe und eine konkave Oberfläche aufweist.

**7.** Gasmessgerät gemäss einem der Ansprüche 1 bis 6, **dadurch gekennzeichnet, dass** das erste Prozessfenster (114, 214, 314, 414, 514) und/oder das zweite Prozessfenster (218, 318, 418) als afokale Meniskuslinse ausgestaltet sind.

**8.** Gasmessgerät nach einem der Ansprüche 1 bis 8, **dadurch gekennzeichnet, dass** dieses ferner eine Gassonde (107, 207, 307, 507) umfasst, welche einen im Wesentlichen zylinderförmigen Sondenkörper (110, 210, 310, 510) mit mindestens einer Prozessöffnung (111, 211, 311, 511) umfasst, durch welche im Betrieb das Messmedium in das Innere des Sondenkörpers (110, 210, 310, 510) eindringen kann, wobei ein Ende der Gassonde (107, 207, 307, 507) im Betrieb mit dem ersten Gehäuse (101, 201, 301, 501) verbunden ist.

**9.** Gasmessgerät gemäss Anspruch 8, **dadurch gekennzeichnet, dass** die Gassonde einen Spülgasanschluss (520) für ein Spülgas und mindestens eine Spülgasleitung (523) umfasst.

**10.** Gasmessgerät gemäss Anspruch 9, **dadurch gekennzeichnet, dass** im Betrieb das ersten Prozessfenster (514) und/oder das zweite Prozessfenster mediumsseitig ein Spülgaspolster aufweisen.

**11.** Gasmessgerät gemäss einem der Ansprüche 8 bis 10, **dadurch gekennzeichnet, dass** das optische Umlenkelement (512) dichtungsfrei befestigt ist und im Betrieb vom Spülgas umspült wird.

**12.** Gasmessgerät gemäss einem der Ansprüche 1 bis 11, **dadurch gekennzeichnet, dass** der Laser (102, 202, 302, 402) durchstimmbar ist.

**13.** Gasmessgerät gemäss einem der Ansprüche 1 bis 12, **dadurch gekennzeichnet, dass** der zu bestimmende chemische und/oder physikalische Parameter mindestens einen der folgenden Parameter umfasst: Temperatur, Druck und/oder die Konzentration mindestens eines Gases, wie Sauerstoff, Kohlendioxid, Kohlenmonoxid, Stickoxide, Ammoniak, Amine, Halogenwasserstoffe, Schwefelwasserstoffe, Schwefeldioxid, Wasser oder Mischungen daraus.

**Fig. 1**

**Fig. 2**

**Fig. 3**

**Fig. 4**

**Fig. 5**

**EP 2 604 999 A1**

| Europäisches Patentamt / European Patent Office / Office européen des brevets | **EUROPÄISCHER RECHERCHENBERICHT** | **Nummer der Anmeldung**<br>EP 11 19 3681 |
|---|---|---|

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>Y | US 5 331 409 A (THURTELL GEORGE [CA] ET AL) 19. Juli 1994 (1994-07-19)<br>* Spalte 3, Zeile 11 - Zeile 51 *<br>* Spalte 4, Zeile 19 - Spalte 5, Zeile 15 *<br>* Abbildung 2 * | 1,5,6, 12,13<br>2-4,8-11 | INV.<br>G01N21/39 |
| X<br>A | US 3 805 074 A (MC CORMACK K) 16. April 1974 (1974-04-16)<br>* Spalte 1, Zeile 3 - Zeile 5 *<br>* Spalte 2, Zeile 52 - Zeile 65 *<br>* Spalte 3, Zeile 56 - Spalte 4, Zeile 12 *<br>* Spalte 4, Zeile 42 - Zeile 46 *<br>* Spalte 4, Zeile 55 - Zeile 67 *<br>* Abbildungen 4,5,6A,6B * | 1,5,6, 12,13<br>2-4 | |
| X<br>Y | EP 2 065 738 A1 (SMITHS GROUP PLC [GB]) 3. Juni 2009 (2009-06-03)<br>* Spalte 1, Zeile 1 - Zeile 29 *<br>* Spalte 3, Zeile 35 - Zeile 48 *<br>* Spalte 5, Zeile 7 - Spalte 6, Zeile 3 *<br>* Spalte 6, Zeile 41 - Zeile 45 *<br>* Abbildungen 1,3,4a,7,8 * | 1-5,12, 13<br>2-4 | **RECHERCHIERTE SACHGEBIETE (IPC)**<br>G01N<br>H01S |
| A,D | DE 20 2008 013557 U1 (ARGOS MESSTECHNIK GMBH [DE]) 12. Februar 2009 (2009-02-12)<br>* Absatz [0004] *<br>* Absatz [0010] - Absatz [0017] *<br>* Abbildungen 1,2 * | 1-6,12, 13 | |
| Y | US 5 963 336 A (MCANDREW JAMES [US] ET AL) 5. Oktober 1999 (1999-10-05)<br>* Spalte 4, Zeile 46 - Zeile 54 *<br>* Spalte 7, Zeile 11 - Spalte 8, Zeile 38 *<br>* Abbildung 2b * | 1,2,7 | |

-/--

Der vorliegende Recherchenbericht wurde für alle Patentansprüche erstellt

| Recherchenort | Abschlußdatum der Recherche | Prüfer |
|---|---|---|
| München | 27. August 2012 | D'Alessandro, Davide |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EUROPÄISCHER RECHERCHENBERICHT**

Europäisches Patentamt
European Patent Office
Office européen des brevets

Nummer der Anmeldung

EP 11 19 3681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 068 037 A1 (HELL RUDOLF DR ING GMBH [DE]) 5. Januar 1983 (1983-01-05) * Zusammenfassung * * Seite 4 - Seite 5 * * Seite 7 * * Abbildungen 1-3 * ----- | 1,2,7 | |
| A | US 2003/002547 A1 (LEE JUNG YUAN [TW]) 2. Januar 2003 (2003-01-02) * Absätze [0009], [0013], [0024], [0025] * * Abbildungen 4,6 * ----- | 1,7 | |
| A | GB 1 303 412 A (-) 17. Januar 1973 (1973-01-17) * Seite 3, Zeile 14 - Zeile 21 * * Abbildung 3 * ----- | 7 | |
| Y | DE 44 43 016 A1 (SICK OPTIK ELEKTRONIK ERWIN [DE]) 5. Juni 1996 (1996-06-05) * Abbildungen 1-3 * * Seite 1, Zeile 35 - Zeile 55 * * Spalte 2, Zeile 36 - Zeile 44 * * Spalte 3, Zeile 31 - Zeile 52 * * Spalte 4, Zeile 55 - Spalte 5, Zeile 3 * ----- | 2,3,8-11 | RECHERCHIERTE SACHGEBIETE (IPC) |
| Y | US 4 549 080 A (BASKINS LOWELL L [US] ET AL) 22. Oktober 1985 (1985-10-22) * Spalte 3, Zeile 25 - Zeile 52 * * Spalte 6, Zeile 25 - Zeile 56 * * Abbildung 1 * ----- | 2,3,8 | |
| Y | US 6 064 488 A (BRAND JOEL A [US] ET AL) 16. Mai 2000 (2000-05-16) * Abbildungen 1,2 * * Zusammenfassung * * Spalte 1, Zeile 5 - Zeile 8 * * Spalte 2, Zeile 40 - Zeile 50 * * Spalte 3, Zeile 26 - Spalte 4, Zeile 8 * ----- | 2,3,8 | |

Der vorliegende Recherchenbericht wurde für alle Patentansprüche erstellt

| Recherchenort | Abschlußdatum der Recherche | Prüfer |
|---|---|---|
| München | 27. August 2012 | D'Alessandro, Davide |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

    Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 11 19 3681

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-6, 12, 13

spektroskopisches Gasmessgerät mit einem als Meniskuslinse ausgestalteten Prozessfenster, wobei vorzugsweise die Strahlung zweimal mit dem Messmedium wechselwirkt;
---

2. Anspruch: 7

spektroskopisches Gasmessgerät mit einem als afokaler Meniskuslinse ausgestalteten Prozessfenster;
---

3. Ansprüche: 8-11

spektroskopisches Gasmessgerät mit einem als Meniskuslinse ausgestalteten Prozessfenster, das ferner eine zylinderförmige Gassonde umfasst.
---

**ANHANG ZUM EUROPÄISCHEN RECHERCHENBERICHT**
**ÜBER DIE EUROPÄISCHE PATENTANMELDUNG NR.**

EP 11 19 3681

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2012

| Im Recherchenbericht angeführtes Patentdokument | Datum der Veröffentlichung | Mitglied(er) der Patentfamilie | Datum der Veröffentlichung |
|---|---|---|---|
| US 5331409 A | 19-07-1994 | KEINE | |
| US 3805074 A | 16-04-1974 | CA 1011129 A1<br>DE 2362935 A1<br>FR 2212927 A5<br>JP 49099082 A<br>US 3805074 A | 31-05-1977<br>04-07-1974<br>26-07-1974<br>19-09-1974<br>16-04-1974 |
| EP 2065738 A1 | 03-06-2009 | EP 2065738 A1<br>US 2009141273 A1 | 03-06-2009<br>04-06-2009 |
| DE 202008013557 U1 | 12-02-2009 | KEINE | |
| US 5963336 A | 05-10-1999 | DE 69628623 D1<br>DE 69628623 T2<br>EP 0768525 A2<br>JP 9203707 A<br>US 5963336 A<br>US 6154284 A<br>US 6493086 B1<br>US 2003063284 A1 | 17-07-2003<br>29-04-2004<br>16-04-1997<br>05-08-1997<br>05-10-1999<br>28-11-2000<br>10-12-2002<br>03-04-2003 |
| EP 0068037 A1 | 05-01-1983 | AT 11601 T<br>AU 8519182 A<br>BR 8203820 A<br>DE 3168617 D1<br>DK 281382 A<br>EP 0068037 A1<br>JP 58007121 A | 15-02-1985<br>06-01-1983<br>28-06-1983<br>14-03-1985<br>28-12-1982<br>05-01-1983<br>14-01-1983 |
| US 2003002547 A1 | 02-01-2003 | TW 500268 U<br>US 2003002547 A1 | 21-08-2002<br>02-01-2003 |
| GB 1303412 A | 17-01-1973 | KEINE | |
| DE 4443016 A1 | 05-06-1996 | CA 2164249 A1<br>DE 4443016 A1<br>US 5781306 A | 03-06-1996<br>05-06-1996<br>14-07-1998 |
| US 4549080 A | 22-10-1985 | KEINE | |
| US 6064488 A | 16-05-2000 | KEINE | |

EPO FORM P0461

Für nähere Einzelheiten zu diesem Anhang : siehe Amtsblatt des Europäischen Patentamts, Nr.12/82

**EP 2 604 999 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5331409 A
- DE 202008013557 U1